# FASCICULE DE BREVET EUROPEEN

(11) **EP 0 741 056 B1**
(45) Date de publication et mention de la délivrance du brevet: **25.08.1999**
(21) Numéro de dépôt: 96400952.6
(22) Date de dépôt: 03.05.1996
(51) Int. Cl.: B60N 2/22

(54) **Articulation pour le réglage de l'inclinaison d'un dossier de siège et véhicule**
Gelenk zur Verstellung des Neigungswinkels einer Fahrzeugsitzrückenlehne
Articulation for the adjustment of the angle of inclination of a vehicle seat backrest

(30) Priorité: 05.05.1995 FR 9505425
(43) Date de publication de la demande: 06.11.1996
(73) Titulaire: CESA COMPAGNIE EUROPEENNE DE SIEGES POUR AUTOMOBILES, 92307 Levallois-Perret Cédex (FR)
(72) Inventeur: Amorim, David, 45290 Nogent sur Vernisson (FR)
(74) Mandataire: Moncheny, Michel

(56) Documents cités:
- EP-A- 0 629 523
- BE-A- 654 729
- BE-A- 797 955
- DE-A- 2 349 486
- DE-A- 4 333 147
- GB-A- 1 077 081
- GB-A- 1 193 971

## Description

La présente invention concerne les sièges et a plus particulièrement pour objets une articulation qui est destinée à équiper un siège constitué notamment d'une assise et d'un dossier mobiles en rotation relativement l'un à l'autre selon un axe pour permettre le réglage en inclinaison du dossier et l'application d'une telle articulation à un siège de véhicule automobile terrestre.

Dans de nombreux secteurs industriels et pour de nombreux usages, on se sert de sièges constitués notamment d'une assise et d'un dossier mobiles en rotation relativement l'un à l'autre selon un axe, de manière à pouvoir, à volonté, incliner progressivement le dossier par rapport à l'assise afin de lui donner une position de réglage choisie au gré de l'utilisateur.

De tels sièges sont utilisés notamment à bord des véhicules automobiles terrestres dits de tourisme.

Des solutions d'articulation pour siège de véhicule automobile qui autorisent un réglage progressif, continu ou discontinu, de l'inclinaison du dossier par rapport à l'assise sont par exemple exposées dans les documents FR 2 463 596, FR 2 541 950 et FR 2 547 778 ainsi que dans le document US 4 659 146.

Toutes ces solutions présentent l'inconvénient d'être encombrantes et complexes et, de plus, de nécessiter un effort de commande de déverrouillage relativement important.

L'invention a pour but de remédier à la plupart des inconvénients brièvement rappelés précédemment à l'aide d'une articulation pour siège d'une grande simplicité, monobloc, d'encombrement notamment axial réduit et qui se présente sous la forme d'un boîtier-carter de préférence en forme de barillet pratiquement cylindrique, qui contient et porte tous les constituants nécessaires au réglage de l'inclinaison progressive du dossier.

L'invention a pour objet une articulation de réglage de L'inclinaison, du type décrit dans US-A-4 659 146, qui est destinée à équiper un siège constitué notamment d'une assise et d'un dossier mobiles en rotation relativement l'un à l'autre selon au moins un axe de manière à pouvoir à volonté incliner progressivement le dossier relativement à l'assise et qui comprend, notamment, un flasque fixe destiné à être fixé à l'un de ces assise et dossier, un flasque mobile destiné à être fixé à l'autre de ces assise et dossier, un agencement de guidage associé à l'un au moins de ces flasques pour définir leur axe de rotation, un mécanisme de réglage de l'inclinaison avec une denture qui est portée par l'un de ces flasques et avec au moins un grain denté qui est apte à coopérer avec cette denture et qui est montée mobile pratiquement en translation sur l'autre de ces flasques entre une position enclenchée du mécanisme pour solidariser les deux flasques où il est en prise avec cette denture et une position déclenchée du mécanisme où il est séparé de cette denture pour désolidariser les deux flasques, et un dispositif de commande pour faire passer le mécanisme de l'une à l'autre de ces deux positions avec au moins une came portée par un levier qui est monté flottant mobile en translation et en rotation sur le flasque fixe, avec au moins une contre-came portée par le grain denté pour coopérer avec la came et avec une timonerie pour mouvoir le levier afin de faire agir la came sur la contre-came pour faire passer le mécanisme de l'une à l'autre de ces deux positions et où cette timonerie comprend un organe de manoeuvre et des moyens de transmission pour actionner le levier. Cette articulation est remarquable en ce que l'organe de manoeuvre ou les moyens de transmission opèrent sur le levier à l'écart de son centre instantané de rotation afin en particulier de diminuer les efforts de manoeuvre.

D'autres caractéristiques de l'invention apparaîtront à la lecture de la description et des revendications qui suivent ainsi qu'à l'examen des figures du dessin annexé, donné seulement à titre d'exemple, où :
- la figure 1 est une vue perspective schématique éclatée d'un mode de réalisation d'une articulation selon l'invention;
- les figures 2A et 2B illustrent de manière schématique le mode de la réalisation de la Fig.1 à l'état assemblé, vu d'un côté, respectivement dans ses positions déclenchée et enclenchée,
- les figures 3A et 3B illustrent le même mode de réalisation, vu du côté opposé, dans les mêmes positions respectivement déclenchée et enclenchée ;
- la figure 4 est une vue analogue à celle de la Fig.1 d'un autre mode de réalisation;
- la figure 5 est une vue analogue à celles des Fig.1 et 4 d'un autre mode de réalisation; et
- les figures 6A et 6B sont des vues illustrant le mode de réalisation de la Fig.5, vu d'un côté, respectivement dans les positions déclenchée et enclenchée.

Les articulations pour siège constituées notamment d'une assise et d'un dossier mobiles en rotation relativement l'un à l'autre selon un axe, et en particulier pour ceux destinés à équiper des véhicules automobiles terrestres, étant bien connues dans la technique, on ne décrira dans ce qui suit que ce qui concerne directement ou indirectement l'invention. Pour le surplus, l'Homme du Métier du secteur technique considéré puisera dans les solutions classiques courantes à sa disposition pour faire face aux problèmes particuliers auxquels il est confronté. Tout spécialement l'Homme du Métier pourra se reporter utilement aux documents précités pour plus amples informations.

Dans ce qui suit on utilise toujours un même numéro de référence pour identifier un élément homologue quel que soit le mode de réalisation ou sa variante d'exécution.

Pour la commodité de l'exposé on décrira successivement chacun des constituants d'une articulation perfectionnée selon l'invention avant d'en exposer la fabrication au besoin, et le montage et le fonctionnement.

Dans ce qui suit on décrira une articulation selon l'invention dans son application à un siège qui est destiné à être installé à bord d'un véhicule automobile terrestre et qui est constitué notamment d'une assise et d'un dossier d'architecture classique et pour cela ni décrite ni illustrée en détail, mobiles en rotation relativement l'un à l'autre selon un axe Δ de manière à pouvoir, à volonté, incliner progressivement le dossier par rapport à l'assise dans une position oblique améliorant le confort de l'occupant. Il est clair que cette application spécifique n'est pas la seule.

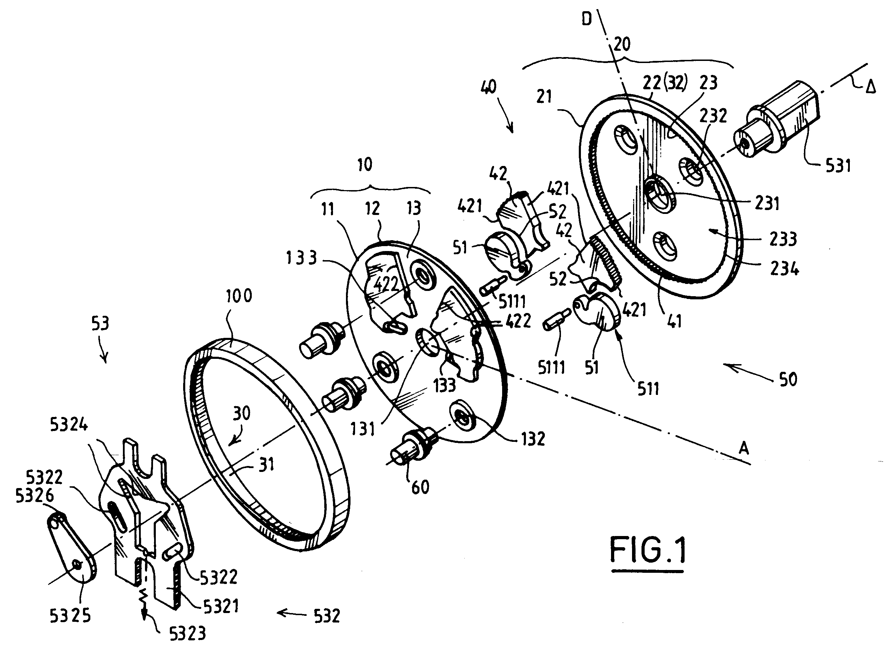

Dans ce cas particulier l'assise A et le dossier D sont signalés symboliquement par des lignes tracées sur la figure 1 du dessin.

Une articulation perfectionnée selon l'invention comprend, essentiellement, un flasque 10 fixe, un flasque 20 mobile, un agencement 30 de guidage définissant l'axe de rotation Δ, un mécanisme 40 de réglage de l'inclinaison, un dispositif 50 de commande et des moyens 60 de fixation.

Le flasque fixe 10 se présente à la manière d'une plaque 11 simple ou double, en disque ou en triangle selon le mode de réalisation, avec une tranche 12 s'il y a lieu circulaire et un fond 13. Le fond 13 est transpercé d'un passage 131 par exemple central, d'au moins un trou 132 et de préférence plusieurs et s'il y a lieu régulièrement répartis et concentriques au passage 131, ainsi que d'au moins une lumière 133. On comprendra par la suite le rôle du passage 131, des trous 132 et des lumières 133.

Le flasque mobile 20 se présente à la manière d'une plaque 21, en forme de disque ou de triangle selon le mode de réalisation, avec une tranche 22 de préférence au moins partiellement circulaire et s'il y a lieu un fond ou face 23. Le fond ou face 23 est transpercé d'un passage 231 par exemple central, d'au moins un trou 232 le cas échéant de préférence plusieurs régulièrement répartis et concentriques au passage 231, et au besoin d'un alvéole 233 et d'une collerette 234.

Le flasque mobile est guidé en rotation par rapport au flasque fixe, autour de l'axe Δ, à l'aide de l'agencement de guidage 30.

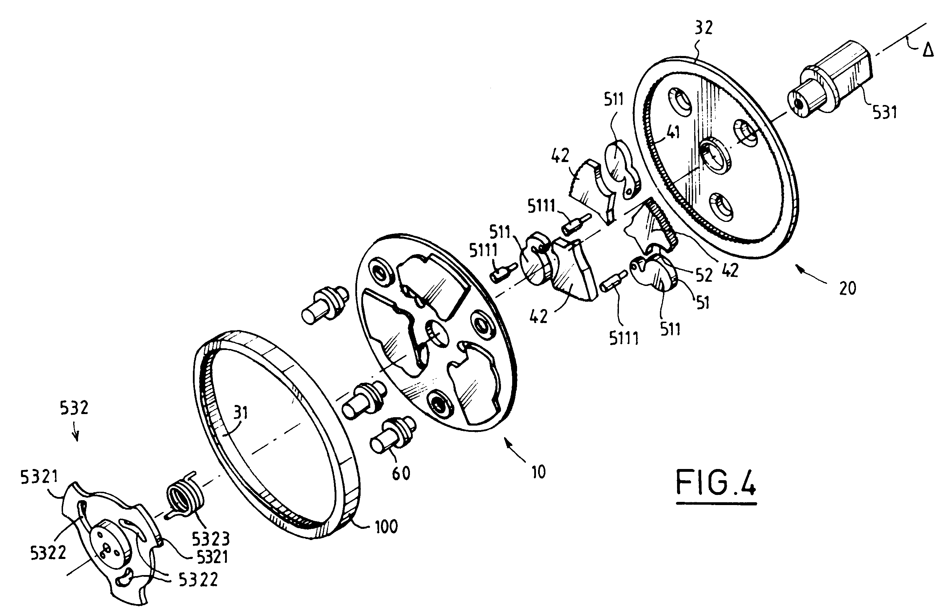

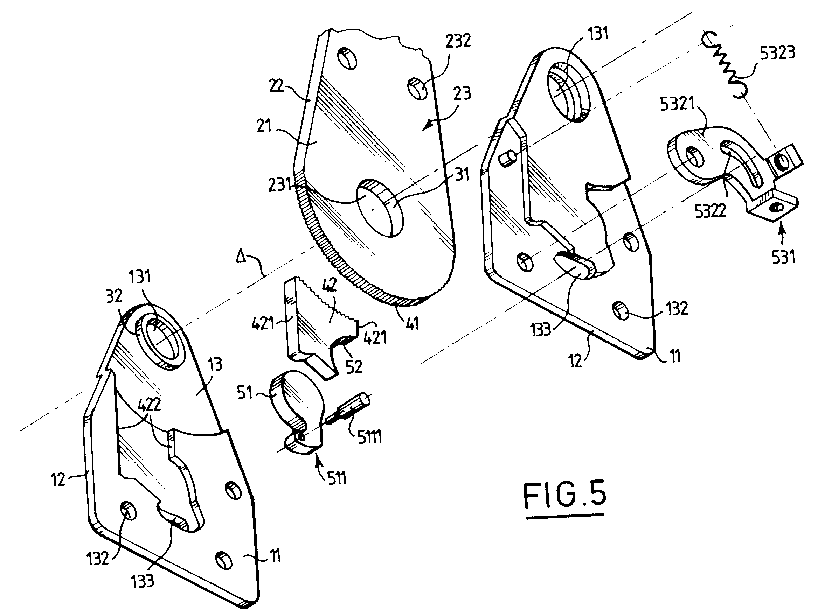

Cet agencement 30 comprend une portée intérieure 31 et une portée extérieure 32. La portée intérieure 31 est ménagée par exemple sur la paroi intérieure d'un anneau 100 alors que la portée extérieure 32 est ménagée de préférence alors sur la tranche 22 du flasque mobile 20 comme illustré sur les Figures 1 et 4. Pour le mode de réalisation de la figure 5, la portée intérieure 31 est ménagée au travers de la plaque du flasque mobile dans le passage 231 et la portée extérieure 32 se présente à la manière d'un collet ménagé sur l'un au moins des fonds 13 de la plaque dédoublée du flasque fixe.

Le mécanisme de réglage de l'inclinaison 40 comprend une denture 41 en cercle ou en arc de cercle centré sur l'axe Δ et par exemple ménagée sur la collerette 234 ou la tranche 22 du flasque mobile 20, au moins un grain denté 42 qui est apte à coopérer avec la denture 41 et qui est monté mobile en translation s'il y a lieu avec jeu, sur l'un des flasques, de préférence le flasque fixe 10. Un grain denté 42 présente deux flancs 421 opposés parallèles qui coopèrent chacun avec un guide 422 fait d'appuis ménagés sur le fond 13 du flasque fixe, par exemple par emboutissage ou semi-crevé. On observera que les flancs et les guides ont une orientation telle que, de préférence, le grain denté subit une translation non radiale par rapport à l'axe Δ. De la sorte le grain denté 42 peut se déplacer entre une position enclenchée du mécanisme 40 pour solidariser les flasques 10 et 20 où il est en prise avec la denture 41, et une position déclenchée du mécanisme 40 où il est séparé de la denture 41 pour désolidariser les flasques 10 et 20.

Le dispositif de commande 50 comprend une came 51, une contre-came 52 et une timonerie 53. La came 51 qui présente un profil 510 est portée par un levier 511 au moins localement en forme de botte ou similaire, qui est monté flottant, mobile en translation et en rotation, sur le flasque 10. Le levier 511 est muni d'un doigt 5111 à l'écart de son centre instantané de rotation, sur un pied ou similaire du levier. Dans le présent texte l'expression "centre instantané de rotation" a sa définition classique utilisée en mécanique ou en cinématique par exemple. La contre-came 52 présente un contre-profil 520 et est portée par le grain denté 42 de manière à coopérer avec le profil 510 de la came 51. La timonerie 53 comprend un organe de manoeuvre 531 et des moyens de transmission 532. L'organe de manoeuvre 531 se présente par exemple à la manière d'un câble logé dans une gaine souple habituellement désigné dans la technique par *câble Bowden* ou sous la forme d'un arbre logé au moins partiellement dans les passages 131 et 231 transperçant respectivement les fonds 13 et 23 du flasque fixe 10 et du flasque mobile 20. Les moyens de transmission 532 comprennent une plaquette 5321 montée mobile sur le flasque 10 et munie d'au moins une fente ou boutonnière 5322 pour recevoir le doigt 5111 d'un levier flottant 511, et une sollicitation élastique de rappel 5323 tendant à placer le mécanisme 40 dans l'une de ses deux positions, de préférence sa position enclenchée. Selon le mode de réalisation illustré sur la figure 1, la plaquette 5321 est une glissière montée coulissante perpendiculairement à l'axe Δ et qui est munie d'au moins une rampe 5324 destinée à coopérer avec un maneton 5326 d'une patte 5325 montée basculante et dont la rotation à l'encontre de la sollicitation élastique 5323 est obtenue à l'aide de l'organe de manoeuvre 531, arbre ou câble Bowden fixé à une languette recourbée ou similaire. Selon le mode de réalisation illustré sur la figure 4, la plaquette 5321 se présente à la manière d'un disque au besoin échancré monté tournant coaxialement à l'axe Δ et dont la rotation à l'encontre de la sollicitation élastique 5323 est obtenue à l'aide de l'organe de manoeuvre 531, arbre ou câble Bowden. Selon le mode de réalisation illustré sur la Figure 5, la plaquette 5321 se présente à la manière d'un loqueteau monté basculant orthogonalement à l'axe Δ sur le flasque fixe et dont le déplacement à l'encontre de la sollicitation élastique 5323 est obtenu à l'aide de l'organe de manoeuvre 531 par exemple un câble Bowden fixé à une languette recourbée ou similaire.

On notera que le mouvement combiné en translation et en rotation du levier 511 est imposé par le fait que le profil 510 s'appuie, d'une part, sur un contour de guidage G ménagé dans le flasque fixe, délimité par exemple par un embouti ou semi-crevé de ce flasque, et d'autre part, sur le grain 42.

Ainsi, le guidage du levier 511 est assuré par le contour G et le grain 42 alors que l'entraînement de ce levier 511 est assuré par les moyens de transmission 532.

La fente 5322 peut être rectiligne ou incurvée que la plaquette de transmission 5321 soit à déplacement rectiligne ou rotatif. Dans ce dernier cas, les fentes curvilignes permettent d'optimiser le fonctionnement du dispositif de commande pour obtenir notamment une bonne suavité.

Les moyens de fixation 60 se présentent par exemple à la manière de rivets, de vis-écrous, ou comme illustré de goujons épaulés destinés à être matés ou sertis. Ces moyens de fixation servent à réunir chacun des flasques à l'une des armatures des assise et dossier d'un siège, comme il est classique. On observera que pour le mode de réalisation de la Fig.1 ce sont ces goujons qui assurent l'orientation et le guidage de la plaquette glissière 5321.

L'articulation perfectionnée selon l'invention se présente à l'état assemblé sous la forme d'une entité qui a l'aspect d'un boîtier ou d'un barillet cylindrique, relativement plat. Les deux flasques sont réunis par exemple à l'aide de l'anneau qui est serti, soudé ou autrement fixé de toute manière classique courante par exemple au flasque fixe de manière que l'autre flasque mobile et tout ce qui est associé aux deux flasques puisse se déplacer à la fois dans les semi-crevés ou emboutis du flasque fixe et le cas échéant dans l'alvéole du flasque mobile. Tout ce qui précède est clairement illustré sur les figures du dessin annexé auquel il y a lieu de se reporter.

Tous les constituants d'une articulation selon l'invention sont faits par exemple en métaux appropriés ou en résines synthétiques appropriées, qui sont ouvrés selon des techniques traditionnelles convenablement adaptées telle que la découpe, l'estampage, le poinçonnage, le perçage, le moulage,...

Tous les constituants d'une articulation selon l'invention sont réunis, montés et assemblés comme cela ressort clairement notamment de l'examen des figures du dessin.

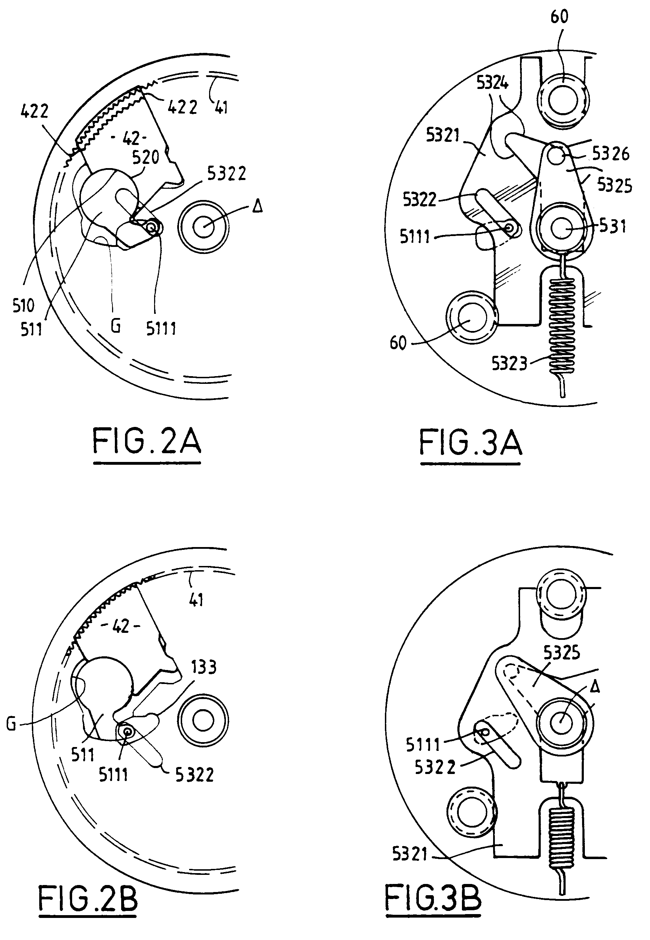

On expliquera maintenant le fonctionnement du mode de réalisation de la figure 1 en association avec les vues des figures 2 et 3.

On rappellera que, comme il est classique le dispositif de commande est équipé d'un organe de manoeuvre avec une poignée de manipulation, calée sur l'arbre apparent à l'extérieur de l'un au moins des flasques fixe et mobile de manière à pouvoir faire tourner cet arbre, ou bien d'une poignée de manipulation fixée à l'extrémité d'un câble Bowden. Une telle poignée est habituellement placée à portée de main de l'occupant du siège, le plus souvent sur un côté de celui-ci.

On supposera qu'à l'état initial le mécanisme de réglage de l'inclinaison est en position enclenchée où denture et grain denté sont en prise. On voit alors que de ce fait le flasque fixe et le flasque mobile sont solidarisés l'un à l'autre et qu'il n'est donc pas possible de modifier l'inclinaison relative du dossier par rapport à l'assise. Ceci est illustré sur les Figures 2B et 3B.

Si maintenant on agit sur la poignée de l'organe de manoeuvre on fait basculer la patte avec son maneton excentré. Le maneton excentré rencontre alors l'une des rampes de la glissière et la fait coulisser à l'encontre de sa sollicitation élastique. En coulissant, la glissière, par ses fentes dans chacune desquelles est engagé un doigt du pied du levier qui porte la came et qui est monté flottant, fait en conséquence se déplacer le doigt et le levier, et le profil de la came agit sur le contre-profil de la contre-came du grain denté dont les dents se séparent alors de la denture. Le mécanisme est alors placé dans sa position déclenchée où le grain est à l'écart de la denture et les flasques fixe et mobile sont ainsi désolidarisés. Ceci est illustré sur les Figures 2A et 2B. On peut donc alors modifier le réglage des positions relatives du dossier et de l'assise.

En relâchant la poignée de l'organe de manoeuvre, la sollicitation élastique de rappel replace l'articulation dans la position initiale où elle est illustrée sur les figures 2B et 3B.

De ce qui précède on comprend donc que la poignée de l'organe de manoeuvre du dispositif de commande n'agit plus directement sur une came. On voit aussi qu'on "attaque" la came par son pied soit directement soit indirectement par la plaquette coulissante, tournante ou basculante selon le mode de réalisation.

Lorsqu'on utilise deux rampes comme illustré sur la figure 1 notamment, on peut provoquer le fonctionnement de l'articulation quel que soit le sens de l'action exercée sur la poignée de manoeuvre.

L'articulation selon l'invention est montée de préférence d'une manière similaire à celle qui est exposée dans le document américain précité, de manière à assurer automatiquement le rattrapage des jeux de fonctionnement existant à l'état initial ou résultant de l'usure.

Un siège est habituellement pourvu de deux articulations selon l'invention, une de chaque côté. Dans ce cas on assure la simultanéité du fonctionnement des deux articulations par exemple en prolongeant l'arbre de l'organe de manoeuvre ou en doublant le câble Bowden de celui-ci.

On observera que la fente qui reçoit le doigt de pied de came est oblique et que, de ce fait, elle peut aussi servir à absorber les efforts éventuels qui se manifesteraient en cas d'irréversibilité non totale des contacts des profil et contre-profil des came et contre-came.

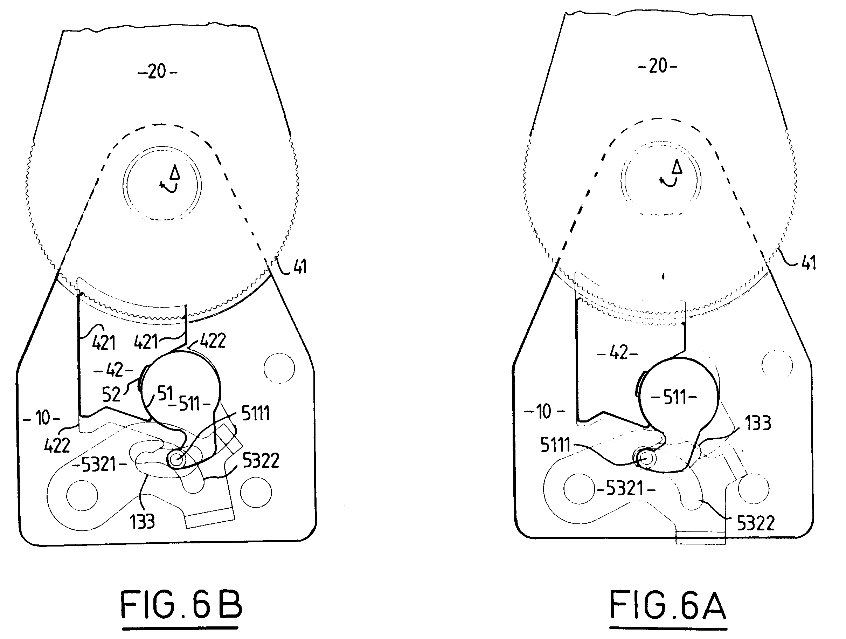

Le fonctionnement des modes de réalisation illustré sur les figures 4, 5 et 6 est similaire à celui que l'on vient d'exposer en détail à propos des figures 1, 2 et 3 et on ne le répétera donc pas.

Ce qui précède montre bien que, outre la diminution de l'effort de manoeuvre et une réduction de l'encombrement, l'articulation selon l'invention procure une amélioration de la résistance à la déformation et à la rupture.

Dans ce qui précède on a supposé que le flasque 10 était fixe et le flasque 20 était mobile. Il est clair que les rôles de ces deux flasques sont permutables et qu'il en est de même du montage et des rôles des autres parties fixes et mobiles de l'articulation selon l'invention.

De ce qui précède on comprend que l'organe de manoeuvre 531 peut opérer soit directement sur le doigt 5111 en y fixant par exemple un câble Bowden, soit indirectement par l'entremise des moyens de transmission 532 en fixant par exemple l'organe de manoeuvre 531, arbre ou câble Bowden à la plaquette 5321 qu'elle se présente à la manière d'une glissière, d'un disque ou d'un loqueteau.

Ce qui précède met bien en lumière les particularités distinctives de l'invention, l'intérêt qu'elle offre et les avantages qu'elle procure.

## Revendications

1. Articulation de réglage de l'inclinaison qui est destinée à équiper un siège constitué notamment d'une assise et d'un dossier mobiles en rotation relativement l'un à l'autre selon au moins un axe de manière à pouvoir à volonté incliner progressivement le dossier relativement à l'assise et qui comprend notamment un flasque (10) fixe destiné à être fixé à l'un de ces assise et dossier, un flasque (20) mobile destiné à être fixé à l'autre de ces assise et dossier, un agencement (30) de guidage associé à l'un au moins de ces flasques (10, 20) pour définir leur axe (Δ) de rotation, un mécanisme (40) de réglage de l'inclinaison avec une denture (41) qui est portée par l'un de ces flasques (10, 20) et avec au moins un grain (42) denté qui est apte à coopérer avec cette denture (41) et qui est monté mobile pratiquement en translation sur l'autre de ces flasques (10, 20) entre une position enclenchée du mécanisme où il est en prise avec cette denture (41) pour solidariser les flasques (10, 20) et une position déclenchée du mécanisme où il est séparé de cette denture (41) pour désolidariser les flasques (10, 20), et un dispositif (50) de commande pour faire passer le mécanisme (40) de l'une à l'autre de ses deux positions avec au moins une came (51) portée par un levier (511) qui est monté flottant mobile en translation et en rotation sur le flasque fixe (10), avec au moins une contre-came (52) portée par le grain denté (42) pour coopérer avec la came (51) et avec une timonerie (53) pour mouvoir le levier (511) afin de faire agir la came (51) sur la contre-came (52) pour faire passer le mécanisme (40) de l'une à l'autre de ses deux positions et où cette timonerie comprend un organe (531) de manoeuvre et des moyens de transmission (532) pour actionner le levier (511), articulation caractérisée en ce que l'organe de manoeuvre (531) ou les moyens de transmission (532) opèrent sur le levier (511) à l'écart de son centre instantané de rotation.

2. Articulation selon la revendication 1, caractérisée en ce que le levier flottant (511) porte un doigt (5111) et en ce que l'organe de manoeuvre (531) opère directement sur le doigt (5111).

3. Articulation selon la revendication 1, caractérisée en ce que le levier flottant (511) porte un doigt (5111) et en ce que l'organe de manoeuvre (531) opère indirectement sur le doigt (5111) par l'entremise de moyens de transmission (532).

4. Articulation selon la revendication 3, caractérisée en ce que les moyens de transmission (532) comprennent une plaquette (5321) montée mobile sur le flasque fixe (10) et munie d'une fente (5322) pour recevoir le doigt (5111) d'un levier flottant (511) et une sollicitation élastique de rappel (5323) tendant à placer le mécanisme (40) dans l'une de ses deux positions.

5. Articulation selon la revendication 4, caractérisée en ce que la plaquette (5321) est un disque monté tournant coaxialement à l'axe (Δ).

6. Articulation selon la revendication 4, caractérisée en ce que la plaquette (5321) est une glissière montée coulissante perpendiculairement à l'axe (Δ) et munie d'au moins une rampe (5324) qui coopère avec un maneton (5326) d'une patte (5325) montée basculante sur et avec l'organe de manoeuvre (531) fait d'un arbre coaxial à l'axe (Δ).

7. Articulation selon la revendication 4, caractérisée en ce que la plaquette (5321) est un loqueteau monté basculant orthogonalement à l'axe (Δ).

8. Application d'une articulation selon l'une quelconque des revendications 1 à 7 à un siège de véhicule automobile terrestre.

## Claims

1. Articulation for adjustment of the angle of inclination which is intended to equip a seat, comprising in particular a seatbase and a seat backrest moveable in rotation relative to one another with respect to at least one axis such as to enable at will the progressive inclination of the seat backrest relative to the seatbase and which comprises in particular a fixed flange (10) intended to be fixed to one of these two, seatbase and seat backrest, a moveable flange (20) intended to be fixed to the other of these two, seatbase and seat backrest, a guidance arrangement (30) associated with at least one of these flanges (10, 20) to define their axis (Δ) of rotation, a mechanism (40) for adjustment of the inclination with a gearing (41) which is carried by one of these flanges (10, 20) and with at least one toothed part (42) which is suitable for cooperating with this gearing (41) and which is mounted moveably, in practice displaceably on the other of these flanges (10, 20) between a locked position of the mechanism where it is engaged with this gearing (41) to couple the flanges (10, 20) and a released position of the mechanism where it is disengaged from this gearing (41) to uncouple the flanges (10, 20) and a control device (50) to cause the mechanism (40) to switch from one to the other of its two positions with at least one cam (51) carried by a lever (511) which is mounted floating, moveable in displacement and in rotation on the fixed flange (10) with at least one counter-cam (52) carried by the toothed part (42) in order to cooperate with the cam (51) and with a linkage (53) in order to move the lever (511) in order to cause the cam (51) to act upon the counter-cam (52) in order to cause the mechanism (40) to switch from one to the other of its two positions and where this linkage comprises an operating member (531) and transmission means (532) in order to activate the lever (511), the articulation characterised in that the operating member (531) or the transmission means (532) operate on the lever (511) at a distance from its instantaneous centre of rotation.

2. Articulation according to claim 1, characterised in that the floating lever (511) carries a finger (5111) and in that the operating member (531) operates directly on the finger (5111).

3. Articulation according to claim 1, characterised in that the floating lever (511) carries a finger (5111) and in that the operating member (531) operates indirectly on the finger (5111) by the intervention of the transmission means (532).

4. Articulation according to claim 3, characterised in that the transmission means (532) comprise a plate (5321) mounted moveably on the fixed flange (10) and equipped with a slit (5322) to receive the finger (5111) of a floating lever (511) and with elastic return-movement stressing (5323) tending to place the mechanism (40) in one of its two positions.

5. Articulation according to claim 4, characterised in that the plate (5321) is a disc mounted pivoting coaxially with the axis (Δ).

6. Articulation according to claim 4, characterised in that the plate (5321) is a slide mounted to slip perpendicular to the axis (Δ) and equipped with at least one ramp (5324) which co-operates with a crank pin (5326) of a hook (5325) mounted tiltably on and with the operating member (531) owing to a shaft which is coaxial to the axis (Δ).

7. Articulation according to claim 4, characterised in that the plate (5321) is a small catch mounted tiltably orthogonally to the axis (Δ).

8. Application of an articulation according to any of claims 1 to 7 for a seat of a surface transport automotive vehicle.

## Patentansprüche

1. Gelenk zur Einstellung der Neigung, welches dafür bestimmt ist, einen Sitz auszustatten, welcher insbesondere von einer Sitzfläche und einer Rückenlehne gebildet ist, die in Drehung zueinander gemäß wenigstens einer Achse derart beweglich sind, daß die Rückenlehne wunschgemäß. schrittweise bezüglich der Sitzfläche geneigt werden kann, und welches insbesondere einen festen Flansch (10) aufweist, welcher dafür bestimmt ist, an der einen dieser Sitzfläche und Rückenlehne befestigt zu werden, und einen beweglichen Flansch (20), welcher dafür bestimmt ist, an der anderen dieser Sitzfläche und Rückenlehne befestigt zu werden, eine Führungsvorrichtung (30), welche mit wenigstens einem dieser Flansche (10, 20) verbunden ist, um ihre Drehachse (Δ) zu definieren, einen Verstellmechanismus (40) für die Neigung mit einer Verzahnung (41), welche von einem dieser Flansche (10, 20) getragen ist, und mit wenigstens einem gezahnten Paßstück (42), welches geeignet ist, mit dieser Verzahnung (41) zusammerzuwirken, und welches praktisch beweglich in Translation auf dem anderen dieser Flansche (10, 20) zwischen einer verrasteten Position des Mechanismus, in welcher es in Eingriff mit dieser Verzahnung (41) ist, zur einstückigen Verbindung der Flansche (10, 20), und einer gelösten Position des Mechanismus, in welcher es von dieser Verzahnung (41) getrennt ist, um die Flansche (10, 20) zu trennen, angeordnet ist, und eine Steuervorrichtung (50), um den Mechanismus (40) von der einen in die andere seiner beiden Positionen wechseln zu lassen, mit wenigstens einer Nocke (51), die von einem Hebel (511) getragen ist, welcher in Translation und in Drehung auf dem festen Flansch (10) beweglich lose gelagert ist, mit wenigstens einer von dem gezahnten Paßstück (42) getragenen Gegennocke (52), um mit der Nocke (51) zusammenzuwirken, und mit einem Gestänge (53) zur Bewegung des Hebels (511), um die Nocke (51) auf die Gegennocke (52) einwirken zu lassen, um den Mechanismus (40) von der einen in die andere seiner beiden Positionen wechseln zu lassen, und wobei das Gestänge ein Betätigungsorgan (531) und Übertragungsvorrichtungen (532) zum Antrieb des Hebels (511) aufweist, wobei das Gelenk dadurch gekennzeichnet ist, daß das Betätigungsorgan (531) oder die Übertragungsvorrichtungen (532) auf den Hebel (511) mit Abstand von seinem momentanen Drehmittelpunkt einwirken.

2. Gelenk gemäß Anspruch 1, dadurch gekennzeichnet, daß der lose gelagerte Hebel (511) einen Zapfen (5111) trägt, und daß das Betätigungsorgan (531) direkt auf den Zapfen (5111) einwirkt.

3. Gelenk gemäß Anspruch 1, dadurch gekennzeichnet, daß der lose gelagerte Hebel (511) einen Zapfen (5111) trägt, und daß das Betätigungsorgan (531) indirekt auf den Zapfen (5111) durch Vermittlung der Übertragungsvorrichtungen (532) einwirkt.

4. Gelenk gemäß Anspruch 3, dadurch gekennzeichnet, daß die Übertragungsvorrichtungen (532) ein beweglich auf dem festen Flansch (10) angebrachtes Plättchen (5321), welches mit einem Spalt (5322) ausgestattet ist, um den Zapfen (5111) eines lose gelagerten Hebels (511) aufzunehmen, und eine elastische Spannfeder (5323) aufweisen, welche dahin strebt, den Mechanismus (40) in der einen seiner beiden Positionen anzuordnen.

5. Gelenk gemäß Anspruch 4, dadurch gekennzeichnet, daß das Plättchen (5321) eine koaxial zu der Achse (Δ) drehende Scheibe ist.

6. Gelenk gemäß Anspruch 4, dadurch gekennzeichnet, daß das Plättchen (5321) eine senkrecht zu der Achse (Δ) gleitend angeordnete Gleitschiene ist, welche mit wenigstens einer Rampe (5324) ausgestattet ist, die mit einem Kurbelzapfen (5326) eines Anhängsels (5325) zusammenwirkt, welches hin- und herschwingend auf und mit dem Betätigungsorgan (531), das von einer zu der Achse (Δ) koaxialen Welle gebildet ist, angebracht ist.

7. Gelenk gemäß Anspruch 4, dadurch gekennzeichnet, daß das Plättchen (5321) ein rechtwinklig zu der Achse (Δ) hin- und herschwingend angebrachter Einrastriegel ist.

8. Verwendung eines Gelenks gemäß irgendeinem der Ansprüche 1 bis 7 an einem terrestrischen Kraftfahrzeugsitz.
